# EUROPEAN PATENT APPLICATION

(11) **EP 2 071 969 A2**
(43) Date of publication of application: **24.06.2009**
(21) Application number: 08021965.2
(22) Date of filing: 18.12.2008
(51) Int. Cl.: A42C 2/00, A42B 3/06

(54) **A composite crash helmet and a method of manufacturing same**

(30) Priority: 21.12.2007 IT TO20070936
(71) Applicant: CD DESIGN S.r.l., 10092 Beinasco (TO) (IT)
(72) Inventor: Conti, Livio, 10092 Beinasco (TO) (IT)

(57) **Abstract**

The crash helmet comprises an outer shell (10), an annular or arc-shaped inner wall (13) spaced apart from the shell so as to define a gap (15) containing a layer of expanded-polystyrene injected between the shell and the inner wall. The outer shell and the inner wall provide respective rims (20, 23) mutually sealingly coupled by means of a gasket (30) engaged along both of the rims (20, 23).

## Description

The present invention relates to a crash helmet for motor-cyclists, and, more generally, people engaged in various activities requiring a protective helmet. More particularly, the present invention relates to a composite crash helmet of the general kind described in Italian patent application No. TO2004A000569, which discloses a crash helmet having an outer shell, an inner wall located at a distance from the shell, and a layer of expanded polystyrene injected between the shell and the inner wall. The polystyrene layer firmly connects the shell to the inner wall, favouring the structural strength and allowing to manufacture a lighter helmet, taken as a whole.

The solution described in the aforesaid document involves an improvement over many crash helmets of conventional design, in which a polystyrene layer is glued at different points to an outer shell. A rubber gasket running along the base of the helmet covers the lower edges of the shell and the polystyrene layer, for aesthetic reasons and in order to prevent the sharp edge of the shell form causing scratches, typically when putting the helmet on the tank of the motorcycle.

The present invention is aimed to improve a crash helmet of the type identified at the beginning of the description, attaining simultaneously the following results:
- provisionally holding together the outer shell and the inner wall during the shipping and handling stages which precede the polystyrene injection;
- assure correct relative positioning, i.e. substantial concentricity, between the shell and the inner wall;
- prevent the polystyrene from leaking out of the bottom of the helmet during the injection step.

This and other objects and advantages, which will be understood more clearly herein after, are achieved in accordance with the invention by a crash helmet having the features set forth in claim 1. According to another aspect, the invention provides a method for manufacturing a crash helmet with the steps listed in claim 11. Preferred embodiments of the invention are defined in the dependent claims.

A few preferred, but not limiting embodiments of the invention will now be described, reference being made to the attached drawings, in which:
Figure 1 is a side view in vertical cross-section of a crash helmet according to the invention;
Figure 2 is a partial cross-sectional view, to an enlarged scale, taken along the line II-II in figure 1;
Figures 3 and 4 are views similar to those of Figure 1, depicting crash helmets in accordance with other embodiments of the invention;
Figure 5 is a transversal vertical cross-sectional view of a gasket which is visible also in figure 2; and
Figure 6 shows a variant of the embodiment of figure 2.

Referring to the drawings, a crash helmet according to the invention includes an outer shell 10 forming a bubble 12 and, in the example of a full-face crash helmet, also a chin protector 12. A reinforcing wall 13 is located within and at a distance from the shell 10, and a layer 14 of expanded polystyrene is injected onto the inner surface of the bubble and into the intermediate gap 15 delimited by the inner reinforcing wall 13 and the outer shell 10.

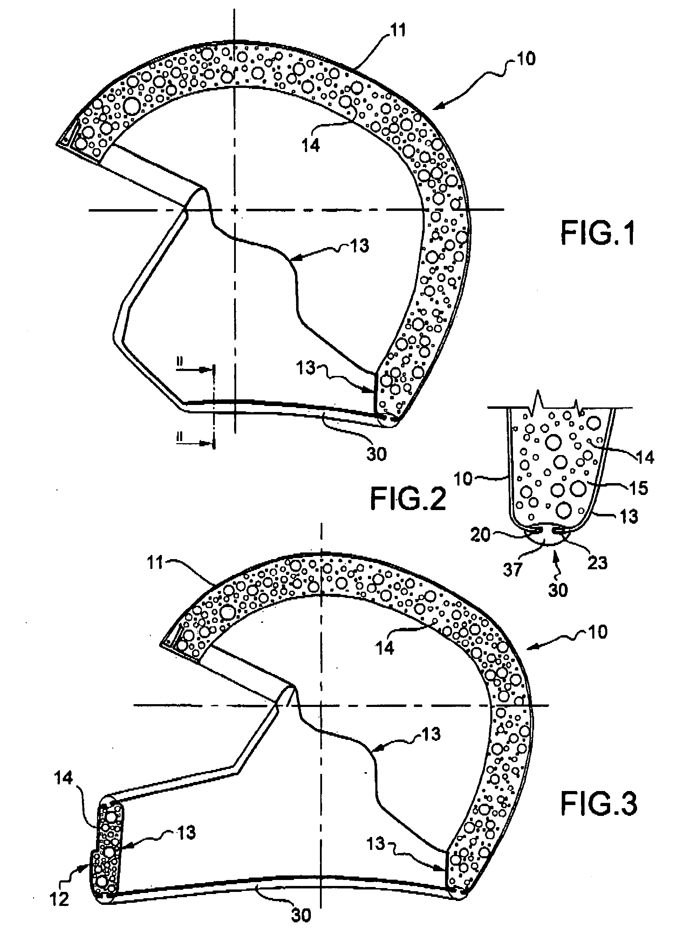

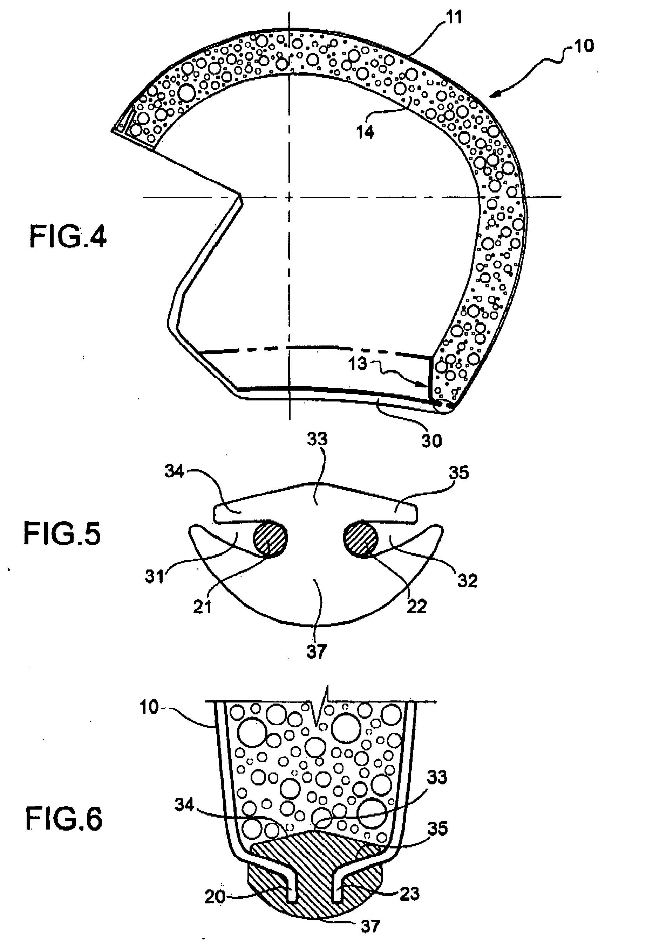

The invention is equally applicable to full-face crash helmets with a chin protector (Figure 3) and open-face crash helmets, i.e. having no chin protector (Figure 1). Depending on requirements and the kind of helmet, the inner wall 13 may take a closed loop shape in plan view for full-face helmets (Figure 3) or for open-face helmets such as that depicted in Figure 1, where the wall 13 runs also across the front or forehead area of the helmet above the opening closed by the visor. Alternatively, the inner wall 13 may take an arched U-shape for open-face helmets (Figure 4), where that wall runs only at the level of the base of the bubble.

As shown in Figure 2, the outer shell 10 and the inner wall 13 provide respective rims or flanges 20, 23 suitably sized so that by fitting the wall 13 within the shell 10, the rims 20, 23 are slightly spaced apart from one another in a radial direction. Throughout the present description and the claims, terms and expressions indicating positions and orientations such as "inner", "outer", "radial", are to be construed as referring to the geometric centre of the helmet and in an assembled and worn condition. In the embodiment shown in Figure 2, the rims 20, 23 are facing one another in an almost butt-like or juxtaposed manner, substantially coplanar and horizontal.

According to the invention, after placing the wall 13 inside the shell, a sealing gasket 30 is fitted in a slightly forced manner onto the rims 20, 23 prior to inject the polystyrene. The gasket 30 keeps the wall 13 correctly spaced apart from the shell in a radial direction, thereby temporarily holding these two components together before injecting the polystyrene which will fix their position. Besides preventing accidental separation of the inner wall from the shell during the shipping and handling stages before they are placed in the injection mould, the gasket 30 ensures the correct radial distance or concentricity between the shell and the inner wall and, while injecting the polystyrene, hermetically seals the bottom of the gap 15, closing the slit which separates the rims 20 and 23.

Preferably, the gasket 30 is an extruded profile of polymeric material, particularly an elastomeric material, having a transversal cross-section (best seen in Figure 5) suitably shaped so as to provide two opposite longitudinal grooves 31, 32 in which the respective rims 20, 23 are tightly fitted with continuity. The gasket 30 has an upper portion 33 facing the inside of the gap 15 and extending so as to partially cover both of the flanges of the shell and the inner wall. The upper portion 33 has two lips 34, 35 which are pressed against the upper surfaces of rims 20, 23 by means of the pressure exerted by the injected polystyrene. In the embodiment of Figures 2 and 5, the upper portion 33 has a wedge-like contour in order to facilitate its insertion from underneath between the rims 20 and 23.

Optionally, with the purpose of more steadily holding the shell with the inner wall in the stages preceding the polystyrene injection, a certain amount of adhesive 21, 22 may be applied at the interface between each rime 20, 23 and the gasket 30, for example in the grooves 31, 32 (figure 5). The action of the adhesive increases the grip provided by the elasticity of the gasket. As will be appreciated, the advantage of having a resilient retaining action should be balanced with the need to easily couple the gasket onto the rims of the shell and the inner wall. According to requirements, one may modify the shape and size of the pips, the thickness of the gasket or the rims or the composition of the material which the gasket is made of.

In the embodiment shown in Figure 6, the grooves of the gasket have the shape of substantially two "L" letters symmetrically arranged with respect to a vertical axis of symmetry. The lower rims 20, 23 are vertical and parallel. This shape of the rims is advantageous in that it simplifies the motion of a cutter performing a cut along the base of the shell in order to separate it from the remaining part produced by moulding. As a matter of fact it is advantageous and convenient to be able to direct and move the cutter horizontally instead of holding it inclined almost vertical to produce horizontal rims such as those designated at 20 and 23 in Figure 2. The portion 37 of the gasket forms the resting base of the helmet and also performs the function of finishing and covering from beneath the edges of the shell and the inner wall.

According to specific requirements, the gasket 30 may not only be applied along the base of the helmet, but also along the edges of the front part of the helmet, around the visor opening.

The principle underlying the invention remaining the same, the constructional details may be modified with respect to the text and drawings, without departing from the scope of the invention, as defined by the appended claims. This applies, for example, to the shape and size of the helmet components and the selected material.

## Claims

1. A crash helmet comprising an outer shell (10), an annular or arc-shaped inner wall (13) spaced apart from the shell so as to define a gap (15) containing a layer of expanded-polystyrene (14) injected between the shell and the inner wall, **characterized in that** the outer shell and the inner wall provide respective rims (20, 23) mutually sealingly coupled by means of a gasket (30) engaged along both of the rims (20, 23).

2. A crash helmet according to claim 1, **characterized in that** the gasket (30) comprises at least a portion (33) located within the gap (15) and which extends so as to cover at least partially the surfaces of the rims (20, 23) of the shell and the inner wall facing towards inside of the gap.

3. A crash helmet according to claim 1, **characterized in that** the gasket (30) provides a pair of grooves (31, 32) each accommodating a respective rim (20, 23) of the shell and the inner wall.

4. A crash helmet according to claim 3, **characterized in that** each rim (20, 23) is tightly coupled in the respective groove (31, 32) of the gasket (30).

5. A crash helmet according to claim 1, **characterized in that** each rim (20, 23) is glued to the gasket (30).

6. A crash helmet according to claim 5, **characterized in that** each rim (20, 23) is glued to the gasket (30) by means of glue (21, 22) applied in the relevant groove (31, 32).

7. A crash helmet according to claim 1, **characterized in that** the rims (20, 23) of the shell and the inner wall are located side by side, substantially parallel and vertical.

8. A crash helmet according to claim 1, **characterized in that** the portion (33) of the gasket (30) within the gap (15) has a wedge-like contour with a vertex pointing towards the inside of the gap.

9. A crash helmet according to claim 1, **characterized in that** the gasket (30) runs along the base of the helmet.

10. A crash helmet according to claim 1, **characterized in that** the gasket (30) also runs along a front part of the helmet, around an opening where the visor is located.

11. A method for manufacturing a crash helmet, comprising the steps of:
a1) providing an outer shell (10) having a peripheral rim (20) ;
a2) providing an annular or arc-shaped wall (13) having a peripheral rim (23);
b) positioning the wall (13) within and radially spaced apart from the shell (10), so as to define a gap (15) between the inner wall and the shell, the rim (20) of the shell being located near the rim (23) of the inner wall;
c) coupling at least a part of the shell to at least a corresponding part of the inner wall by applying a gasket (30) sealingly engaged along both of the rims of the shell and the inner wall;
d) injecting expanded polystyrene into the gap (15), thereby obtaining a layer (14) of expanded polystyrene adherent to the inner wall (13) and the shell (10) and confined within the gap.

12. A method according to claim 11, wherein the step c) is preceded by the step of:
- applying an adhesive (21, 22) at the interface between the gasket (30) and at least one of the rims (20, 23).
